# EUROPÄISCHE PATENTSCHRIFT

(11) **EP 0 571 650 B1**
(45) Veröffentlichungstag und Bekanntmachung des Hinweises auf die Patenterteilung: **24.04.1996**
(21) Anmeldenummer: 92108863.9
(22) Anmeldetag: 26.05.1992
(51) Int. Cl.: A47B 87/00, F16B 12/20

(54) **Zerlegbares Tischsystem**
Knock-down table system
Système de tables démontables

(43) Veröffentlichungstag der Anmeldung: 01.12.1993
(73) Patentinhaber: WIESNER-HAGER MÖBEL GmbH, A-4950 Altheim (AT)
(72) Erfinder: Ballendat, Martin, W-8346 Simbach/Inn (DE)
(74) Vertreter: Patentanwälte Leinweber & Zimmermann

(56) Entgegenhaltungen:
- CH-A- 356 252
- DE-A- 3 309 799
- GB-A- 2 217 588

## Beschreibung

Die Erfindung betrifft ein zerlegbares Tischsystem aus untereinander durch Kupplungselemente lösbar verbundenen Tischplatten mit auf der Unterseite der Tischplatten in Fußaufnahmen lösbar befestigten Einzelfüßen.

Ein zerlegbares Tischsystem muß heute die verschiedensten Konfigurationen ermöglichen. Die Kupplungselemente müssen dabei schnell in Stellung zu bringen sein und zuverlässig halten. Weiter ist es notwendig, daß zur Vermeidung von nebeneinanderstehenden Tischfüßen auch die Einzelfüße nur dort, wo sie benötigt werden in entsprechende Fußaufnahmen der Tischzarge eingesetzt werden. Derartige Systeme erbringen weiter den Vorteil, daß aufgrund der Zerlegbarkeit des Tischsystems in seine Einzelteile das Tischsystem nicht mehr montiert geliefert werden muß, was eine wesentliche Reduzierung der Verpackungs- und Transportkosten zur Folge hat. Die Endmontage beim Kunden entfällt.

Zahlreiche derartig aufgebaute zerlegbare Tischsysteme sind bekannt. Bei den bekannten Tischsystemen sind die Kupplungselemente insgesamt auf Dauer mit den Tischplatten verbunden. Das bedeutet, daß an jeder möglichen Kupplungsstelle jeweils die Kupplungselemente komplett vorhanden sein müssen. Auch ist in der Regel der Zusammenbau des zerlegbaren Tischsystems erschwert, weil die zusammenzubauenden Tische jeweils so gedreht werden müssen, daß ein positives und ein negatives Kupplungselement einander gegenüberliegen. Auch sind die bekannten Kupplungselemente nicht geeignet, benachbarte Tischplatten mit Gewalt spaltvermindernd zusammenzuziehen. Weiter stehen bei bekannten zerlegbaren Tischsystemen die Fußaufnahmen häufig deutlich sichtbar von der Tischplatte nach unten vor. Dies ist dann optisch nachteilig (und kann sogar Ursache für Verletzungsgefahren sein), wenn gar nicht in jede Fußaufnahme auch wirklich ein Einzelfuß eingesetzt werden soll.

Ein Beispiel derartig bekannter Tischsysteme ist im Dokument GB-A-22 17 588 enthalten.

Aufgabe der Erfindung ist es deshalb, ein zerlegbares Tischsystem vorzuschlagen, bei dem sämtliche mit den Tischplatten verbundene Kupplungselemente untereinander baugleich, der benachbarte Tischplatten zusammenziehende Verketter ein loses Einzelteil und der intelligente Eckbeschlag so ausgebildet ist, daß er dann, wenn einmal kein Verketter oder Einzelfuß mit ihm verbunden wird, völlig in der Tischplatte verschwindet. Die Lösung dieser Aufgabe ist in den Ansprüchen gekennzeichnet.

Man erkennt, daß hier die Kupplungselemente aus insgesamt drei Teilen bestehen, von denen zwei (jedenfalls bezüglich ihrer Aufnahmemulde für das dritte) baugleiche Aufnahmebacken sind, während das dritte ein loses Teil, nämlich einen Verketter darstellt, der nur dort verwendet werden muß, wo benachbarte Tische tatsächlich verbunden werden sollen. Der Verketter ist aber nicht Teil der Tischplatten. Die Aufnahmebacken sind überaus einfach ausgebildet: Sie weisen eine Aufnahmemulde auf, in die ein Verriegelungsdorn vorsteht. Der Verketter wird nun mit einer Ankeröffnung auf den Verriegelungsdorn der einen Aufnahmemulde aufgesetzt und erfaßt den Verriegelungsdorn in der Aufnahmemulde des anderen Aufnahmebackens in einem Handrad mit Spiralnut. Durch Verdrehen des Handrades wird der Abstand der beiden Verriegelungsdorne vermindert, so daß die benachbarten Tische zusammengezogen werden.

Die Festigkeit dieser Verbindung ergibt sich nicht nur durch diesen Spannvorgang, sondern auch dadurch, daß der Spannvorgang an zahlreichen Flächen wirksam ist, nämlich den Aufnahmebacken und insbesondere den weiter unten beschriebenen Einhängezapfen. Es entstehen als an zahlreichen Flächen Flächenpressungen, die die durch den Verketter eingetretene Verbindung benachbarter Tische stabil und wackelfrei machen.

Kein Problem besteht natürlich darin, den Verketter mit seiner Ankeröffnung auf den einen Verriegelungsdorn aufzusetzen. Um aber dann die Einführung des Verketters auch in die Aufnahmemulde des anderen Aufnahmebackens und überdies die Aufnahme des anderen Verriegelungsdorns in die Spiralnut zu erleichtern, wird zweckmäßig eine Stirnwand des Verketters von einer Dorndurchtrittsöffnung durchbrochen und die Spiralnut an ihrem den größten Abstand von der Achse des Handrades aufweisenden Ende zu einer Radialnut abgekröpft, die mit der Dorndurchtrittsöffnung in einer Drehendstellung des Handrades fluchtet. Es besteht dann kein Problem, den Verriegelungsdorn durch die Dorndurchtrittsöffnung und die Radialnut auf der Unterseite des Handrades in die Spiralnut einzuführen.

Zweckmäßig wird überdies die Drehendstellung des Handrades, in der die Radialnut mit der Dorndurchtrittsöffnung fluchtet, gerastet ausgebildet. Denn auf diese Weise ist sichergestellt, daß der Verketter sich als loser Teil in der Stellung befindet, in der ein Zusammenbau benachbarter Tischplatten mühelos möglich ist.

Zur Verbesserung des Zusammenhaltes benachbarter Tischplatten werden die beschriebenen Kupplungselemente noch weiter ausgestaltet: Am spaltseitigen Maul der Aufnahmemulden sind in den seitlichen Backen jeweils Lagermulden ausgebildet, denen zwei in der Unterseite des Verketters ausgebildete, über diese Unterseite halbzylindrisch, daneben aber auch seitlich beidseits vollzylindrisch vorstehende untereinander parallele Einhängezapfen entsprechen. Diese quer zur Längsrichtung der Verketter angeordneten Einhängezapfen erleichtern das Einsetzen des Verketters, erbringen aber auch nach der Verriegelung des Verketters in den Aufnahmemulden zahlreiche Abstützpunkte, die für die belastbare und wackelfreie Verbindung der benachbarten Tische sorgen. Das ist vor allem deshalb der Fall, weil durch die Erhöhung des Abstandes der Verriegelungsdorne voneinander beim Drehen des Handrades nicht nur die Tischplattenkanten aufeinander auflaufen, sondern vor allem die Einhängezapfen in ihren Lagermulden verkeilt werden.

Da die Aufnahmebacken baugleich sind, müssen natürlich auch die Einhängezapfen von den Längsenden des Verketters gleiche Abstände haben. Weiter sind sie so angeordnet, daß auch der Abstand der Einhängezapfen untereinander jeweils gleich ihrem Abstand jeweils von dem benachbarten Längsende des Verketters ist.

Ein intelligenter Eckbeschlag besteht jeweils aus zwei der erläuterten Aufnahmebacken und einer Fußaufnahme. Der Eckbeschlag ist dabei zur Gänze in die Tischplatte integriert. Das gilt insbesondere auch für die Fußaufnahme, die erfindungsgemäß nicht ein über die Unterseite der Tischplatte vorstehender Körper, sondern im Gegenteil eine negative Ausnehmung in Form einer in die Tischplatte versenkten Vertikalhülse darstellt. Diese weist zwei einander diametral gegenüberliegende Radialschlitze auf, der wiederum zwei diametral angeordnete Radialzapfen an einem vorstehenden Verriegelungszapfen am oberen Ende jedes Einzelfußes entsprechen. Es wird hier also nicht das obere Ende des Einzelfußes in einer ihm entgegegenerstreckten, von der Tischplattenunterseite nach unten vorstehenden Hülse ergriffen. Vielmehr greift umgekehrt der Einzelfuß durch einen Vertikalzapfen in das Innere der Tischplatte ein. Der Verschluß zwischen Einzelfuß und versenkter Vertikalhülse kann dabei nach Art eines Bajonettverschlusses erfolgen. Hierfür genügt es, das Innenende der versenkten Vertikalhülse mit von den Radialschlitzen rechtsdrehend ausgehenden Schrägrampen zu versehen. Es genügt dann eine Verdrehung des Einzelfusses um nur 90 °, um den Einzelfuß in der Hülse festzulegen. Linksdrehend wird die Verbindung des Einzelfusses mit der versenkten Vertikalhülse wieder aufgelöst.

Aus der obigen Erläuterung folgt, daß sämtliche für den Zusammenbau beliebiger Tischsysteme erforderlichen Teile in die Tischplatte integriert sind, so daß der Tisch nach dem erfindungsgemäßen zerlegbaren Tischsystem auch optisch befriedigt. Seitlich öffnen sich lediglich die Aufnahmemulden für den Verketter. Da jedoch nicht überall ein Verketter eingesetzt werden muß, könnten diese Aufnahmemulden in der Seitenfront der Tischplatte den optischen Eindruck verschlechtern. Es ist deshalb vorgesehen, hier Schließklappen vorzusehen, die die Zugangsöffnungen verschließen, wenn ein Verketter nicht eingesetzt ist. Diese Schließklappen können durch ihr Eigengewicht oder federbeaufschlagt in die Schließstellung überführt werden. Sie verhindern überdies das Eindringen von Fremdkörpern und damit allfällige Schwierigkeiten, wenn später an dieser Stelle ein Verketter angebracht wird.

Weitere Einzelheiten, Vorteile und Merkmale der Erfindung ergeben sich aus der folgenden Beschreibung der Figuren, auf die wegen der erfindungswesentlichen Offenbarung aller im folgenden nicht näher erläuterten Einzelheiten ausdrücklich verwiesen wird. Es zeigen:
- Fig.1: perspektivisch eine Draufsicht auf einen Verketter in seiner Lage bei der Verbindung zweier benachbarter Tische,
- Fig.2: eine Draufsicht auf den Verketter von Fig. 1 mit strichliert angedeuteter Lage der beiden zugehörigen Aufnahmebacken,
- Fig.3: perspektivisch eine Figur zur Erläuterung des Einlegens des Verketters mit einem seiner Einhängezapfen in die Lagermulden des einen Aufnahmebackens,
- Fig.4: eine Seitenansicht zur Erläuterung des Zusammenfügens zweier benachbarter Tische, wobei der Verketter noch in der Schräglage von Fig. 3, aber mit seinen Einhängezapfen schon in die Lagermulde des einen Aufnahmebackens eingelegt ist,
- Fig.5: eine Unteransicht zur Darstellung verschiedener Ausführungsformen der intelligenten Eckbeschläge, in die jeweils zwei Aufnahmebacken und eine Fußaufnahme integriert sind,
- Fig.6: eine teilweise aufgeschnittene Seitenansicht zur Veranschaulichung der Verbindung zweier benachbarter Tische und eines Einzelfußes mit dem intelligenten Eckbeschlag, und
- Fig.7: teilweise im Schnitt die Befestigung eines Einzelfußes in der in die Tischplatte versenkten Fußaufnahme.

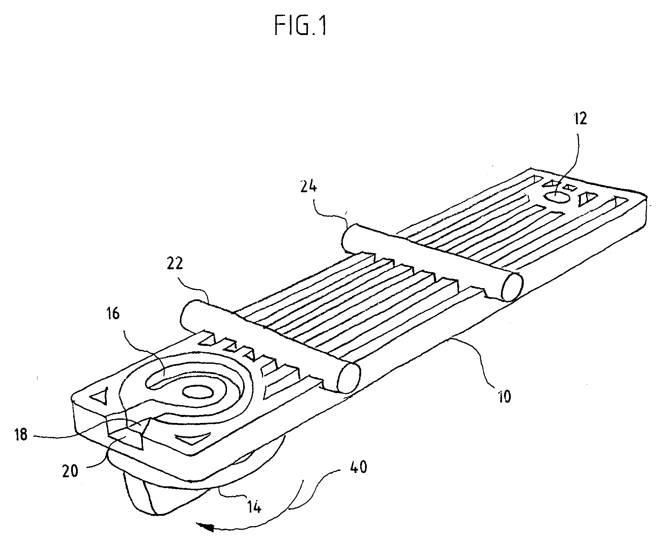

Fig. 1 zeigt einen Verketter 10. Dieser ist ein loses Einzelteil und mit keinem der zu verbindenden Tische des zerlegbaren Tischsystems fest verbunden. Im gezeigten Beispiel besteht er aus Druckguß. Er kann aber auch aus beliebigen anderen Materialien gefertigt sein. Auf seiner nach der Positionierung an der Unterseite der Tischplatten anliegenden Oberseite weist er untereinander parallele Ausnehmungen auf, die ohne Verringerung der Festigkeit das Gewicht vermindern.

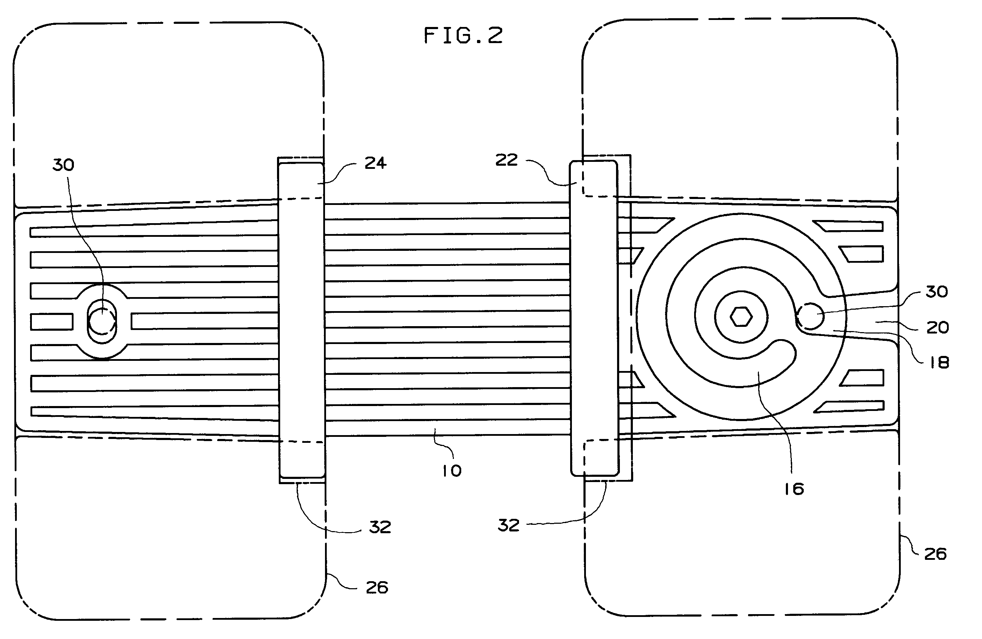

Die allgemeine Form des Verketters 10 ist etwa die eines länglichen Rechtecks. Die Länge beträgt etwa das vierfache der Breite. Am einen Ende des Verketters ist eine Ankeröffnung 12 in Form eines querliegenden Ovals ausgebildet (vgl. Fig. 2). Diese Ende des Verketters 10 ist überdies zum Ende hin konisch verjüngt.

Am anderen Ende des Verketters ist in diesem ein Handrad 14 aus Kunststoff gelagert, das auf seiner Unterseite eine Spiralnut 16 aufweist, die an ihrem den größten Achsabstand aufweisenden Ende zu einer Radialnut 18 abgekröpft ist. Mit der Radialnut 18 fluchtet eine Dorndurchtrittsöffnung 20, die in der schmalseitigen Stirnwand des Verketters 10 ausgebildet ist und sich nach außen keilförmig öffnet. Die Wandungen der Durchtrittsöffnung 20 verlängern dabei die Wandungen der Radialnut 18. Die Durchtrittsöffnung 20 hat von der oben liegenden Abstützseite des Verketters 10 an den Muldenböden der weiter unten noch im einzelnen erläuterten Aufnahmebacken ausgehend die gleiche Tiefe wie die Spiralnut 16.

In der in den Fig. 1 und 2 gezeigten Stellung des Handrades 14, in der die Radialnut 18 und die Dorndurchtrittsöffnung 20 miteinander fluchten, ist das Handrad 14 durch eine übliche federbelastete Rastkugel gerastet, so daß diese Stellung beim Zusammenbau als Grundstellung immer vorgegeben ist. Überdies zeigt der längs eines Durchmessers des Handrades liegende Handgriff jeweils die Stellung der Radialnut 18 an, so daß an der Stellung des Handrades 14 des Verketters 10 jeweils seine Bereitstellung für den Zusammenbau abgelesen werden kann.

In der Abstützfläche auf der Oberseite des Verketters 10 sind weiter zwei Einhängezapfen 22, 24 vorgesehen. Beide sind vollzylindrisch ausgebildet. Sie stehen über die Oberseite des Verketters halbzylindrisch vor. Weiter stehen sie auch beidseits seitlich über die Begrenzung des Verketters 10 als vollzylindrische Zapfen vor. Die Einhängezapfen 22 und 24 sind untereinander parallel. Der Einhängezapfen 22 weist von dem die Dorndurchtrittsöffnung 20 aufweisenden Längsende des Verketters 10 den gleichen Abstand auf, wie der Einhängezapfen 24 vom anderen Längsende des Verketters 10. Überdies ist auch der Abstand der beiden Einhängezapfen 22, 24 untereinander den vorher genannten identischen Abständen gleich.

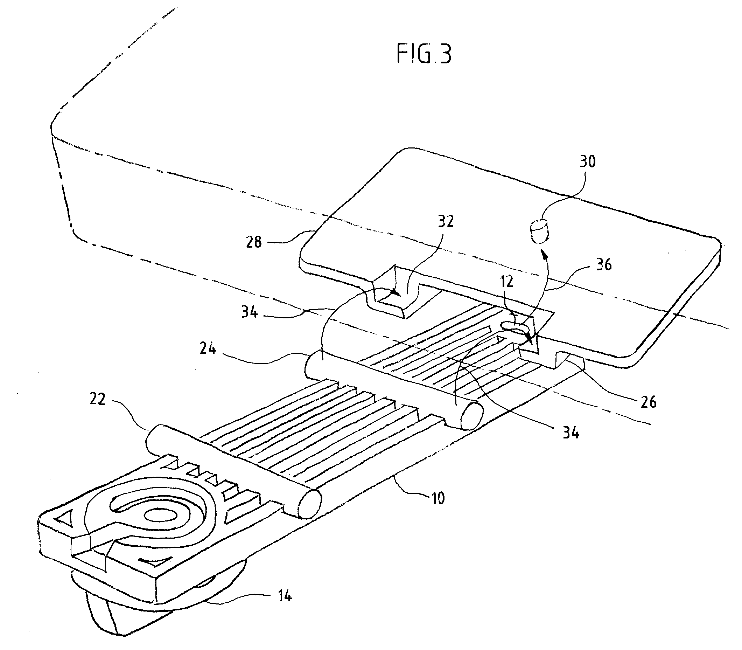

Oben wurde schon gesagt, daß der Verketter 10 ein loses Einzelteil darstellt, das nur dort verwendet werden muß, wo tatsächlich benachbarte Tische verkettet werden sollen. Dem Verketter 10 sind entsprechend auf der Unterseite der Tischplatten als zwei weitere Kupplungselemente Aufnahmebacken 26 zugeordnet. Diese Aufnahmebacken 26 sind in Fig. 2 strichliert angedeutet, während sie in den Fig. 3 bis 5 ausgezogen dargestellt sind. Insbesondere in Fig. 3 erkennt man, daß jeder der Aufnahmebacken 26 aus einer mit der Tischplattenunterseite verschraubten Grundplatte 28 besteht, von dieser Grundplatte stehen nach unten die eigentlichen Aufnahmebacken 26 vor. Diese verlaufen aber zueinander nicht parallel. Sie schließen vielmehr eine sich leicht konisch verjüngende Aufnahmemulde ein, wie das in Fig. 2 deutlich gezeigt ist. Von der Mitte des Bodens dieser Aufnahmemulde steht in die Mulde hinein ein Verriegelungsdorn 30 vor. Dieser ist im vom Tischspalt abliegenden Drittel angeordnet. Weiter weisen die Aufnahmebacken 26 an ihrem tischspaltseitigen Maul in den seitlichen Backen Lagermulden 32 auf, deren Ausbildung in Fig. 3 am besten zu erkennen ist. Diese Lagermulden 32 dienen zur Aufnahme der zylindrisch über die Seitenkanten des Verketters 10 vorstehenden Enden der Einhängezapfen 22 und 24.

Es ist zu beachten, daß die Aufnahmebacken 28 völlig baugleich, zumindest aber spiegelbildlich baugleich sind. Die völlige Baugleichheit sorgt dafür, daß es nicht mehr darauf ankommt, wie der Verketter angebracht oder mit welchem der beiden von ihm zu verbindenden Aufnahmebacken 26 er zuerst verbunden wird. Dies völlige Wahlfreiheit stellt eine erhebliche Arbeitserleichterung dar. Auch muß beim Zusammenstellen von Tischsystemen aus Elementen nur darauf geachtet werden, daß die Elemente so nebeneinander gestellt werden, daß einander jeweils zwei Aufnahmebacken 26 gegenüberliegen. Das ist ohne besondere Aufmerksamkeit möglich. Jedenfalls erfordert es viel weniger Aufmerksamkeit und Präzision als bei sonst üblichen Kupplungselementen.

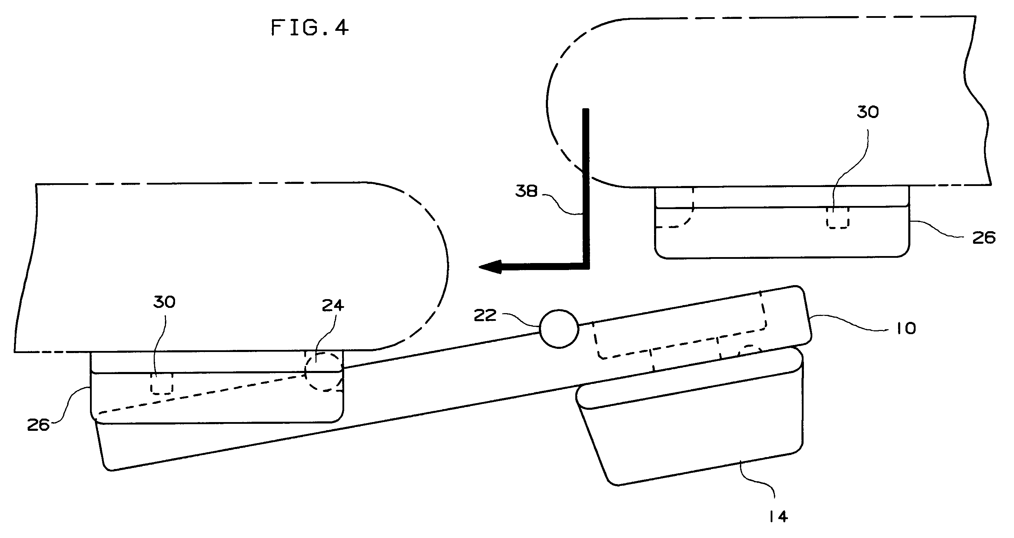

Fig. 3 und 4 lassen besonders gut die Art und Weise der Verbindung benachbarter Elemente durch den Verketter 10 erkennen: Der Verketter 10 wird zunächst in leicht geneigter Stellung (Fig. 4) mit dem über seine Seitenbegrenzung vorstehenden Einhängezapfen 24 in die Lagermulden 32 der einen der beiden zu verbindenden Aufnahmebacken 26 eingelegt, wie das in Fig. 3 durch Pfeile 34 angedeutet ist. Sodann wird der Verketter 10 um den Einhängezapfen 24 als Drehachse so gekippt, daß sein konisch zulaufendes Ende in die Aufnahmemulde zwischen den Aufnahmebacken 26 eintaucht und dabei seine Ankeröffnung 12 den Verriegelungsdorn 30 erfaßt, wie das in Fig. 3 durch Pfeil 36 angedeutet ist. In dieser Stellung hält der Verketter 10 bereits durch die Relativlage der beschriebenen Teile auf der einen Seite und muß nicht mehr festgehalten werden.

Nunmehr wird, wie durch Pfeil 38 in Fig. 4 gezeigt der zu verbindende Tisch zunächst von oben nach unten so an den Verketter 10 herangebracht, daß dieser in der Aufnahmemulde des hier vorgesehenen Aufnahmebackens 26 zu liegen kommt, worauf (vgl. den unteren Abschnitt des Pfeils 38) durch kurzes Aufeinanderzuschieben der beiden benachbarten Tische der Verriegelungsdorn 30 im rechten der beiden in Fig. 4 gezeigten Tische durch die Dorndurchtrittsöffnung 20 und die Radialnut 18 in die Spiralnut 16 des Handrades eintaucht und die in Fig. 2 angedeutete Stellung einnimmt.

Wird nun das Handrad 14 gedreht, wie durch Pfeil 40 in Fig. 1 angedeutet, dann wird dadurch der Abstand zwischen dem Verriegelungsdorn 30 und der Achse des Handrades 14 vermindert. Da aber der Verriegelungdorn 30 ortsfest mit seinem Tisch verbunden ist, wird dadurch gleichzeitig der Abstand der beiden Verrieglungsdorne 30 (vgl. Fig. 2) vermindert, die beiden zu verbindenden Tische werden zusammengezogen und auch der Einhängezapfen 22 tritt nun in Anlage an die entsprechenden Flächen der Lagermulde 32 dieses Aufnahmebackens 26. Es ist so eine starre und durch vielfache Abstützung wackelfest stabile Verbindung der benachbarten Elemente des zerlegbaren Tischsystems erzielt.

Selbstverständlich genügt es für das Auseinandernehmen der verbundenen Elemente, das Handrad 14 wieder in die gerastete Stellung nach den Fig. 2 und 3 zu bringen und den Verketter 10 in umgekehrter Bewegungsreihenfolge zu lösen.

In den Fig. 2 bis 4 sind Aufnahmebacken 26 gezeigt, die Einzelteile darstellen und je für sich mit der Tischplattenunterseite verbunden werden.

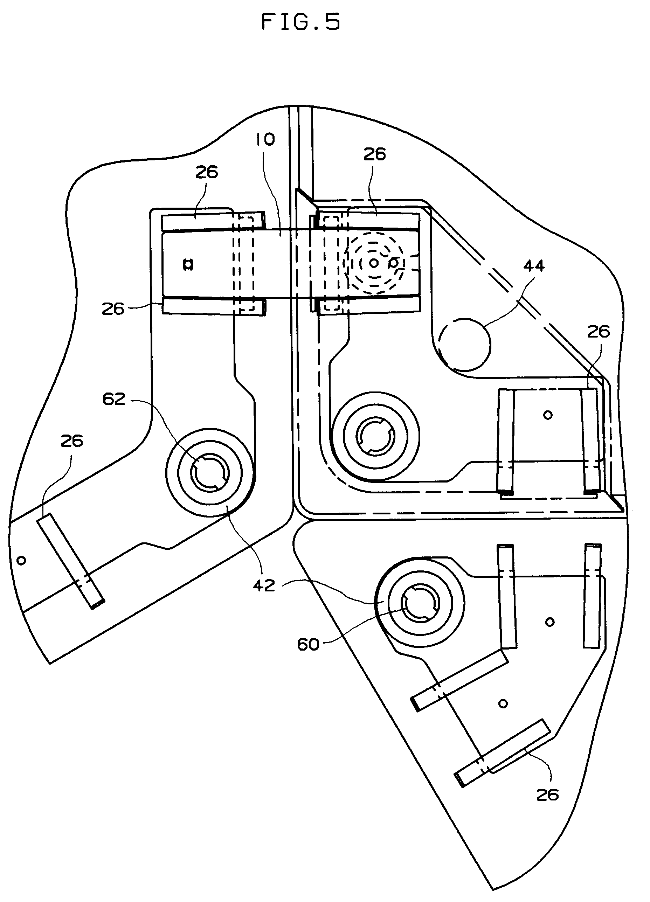

Fig. 5 zeigt verschiedene Ausführungsbeispiele intelligenter Eckbeschläge, wie sie in der Praxis vorzugsweise verwendet werden. Jeder dieser intelligenten Eckbeschläge integriert jeweils zwei Aufnahmebacken 26 mit einer versenkten Fußaufnahme 42 für einen Einzelfuß. Beim intelligenten Eckbeschlag für den einen Öffnungswinkel von 90 ° aufweisenden Tisch ist in Fig. 5 überdies ein Stapelpuffer 44 angedeutet.

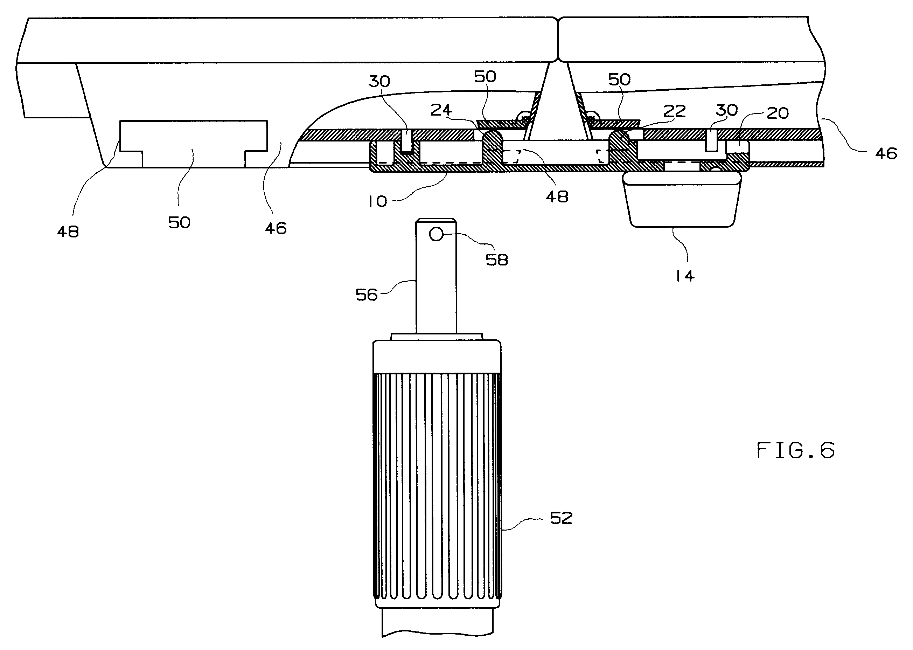

Fig. 6 zeigt teilweise aufgeschnitten die Verbindung zweier benachbarter Elemente durch einen Verketter 10 im Bereich der Tischplatte 46. Man erkennt, daß sich der Verketter fast nahtlos in die Unterseite der Tischplatte einfügt. Durch seine abgerundete Bauform besteht durch ihn weder Verletzungsgefahr, noch ist er eine ästhetische Belastung.

Man erkennt aber in Fig. 6 weiter im Bereich der Tischzarge offene Zugangsöffnungen 48, wie sie für das Einsetzen des Verketters 10 in die Aufnahmebacken 26 auch erforderlich sind. Nun liegt es aber auf der Hand, daß keineswegs in jede Aufnahmebacke 26 auch ein Verketter 10 eingesetzt wird. Insbesondere an den Außenkante des aus verschiedenen Elementen zusammengestellten Tisches sind natürlich ebenfalls solche Zugangsöffnungen 48 zu den Aufnahmebacken 26 vorhanden. Diese sind überdies in den Tischseitenkanten auch dann sichtbar, wenn diese Tischseitenkanten nicht vertikal, sondern auf die in Fig. 6 gezeigte Weise etwas nach innen geneigt sind. Zur Verbesserung der Ästhetik und zur Vermeidung des Eintretens von Fremdkörpern in die Aufnahmemulden der Aufnahmebacken 26 sind deshalb auf die in Fig. 6 gezeigte Weise an der Innenwand der Tischseitenkanten Klappen 50 angelenkt, die bei nicht vorhandenem Verketter 10 aufgrund ihres Eigengewichtes oder beaufschlagt durch eine Feder in die Zugangsöffnungen 48 hinunterfallen und diese bündig abschließen. Selbstverständlich besteht die Schauseite der Klappen 50 aus dem gleichen Material wie die Tischseitenkanten. Wird aber ein Verketter 10 eingesetzt, so drückt dieser einfach die Klappen 50 weg und hält sie, solange der Verketter in Stellung bleibt, durch die Einhängezapfen 22 und 24 in der hochgeklappten Stellung.

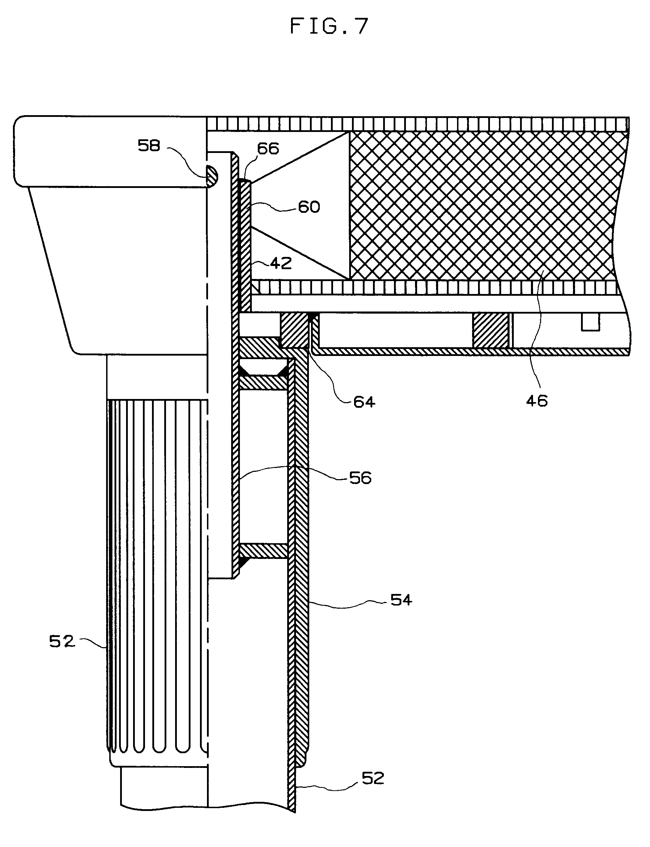

Wie oben schon anhand von Fig. 5 erläutert, weist der intelligente Eckbeschlag nicht nur die Aufnahmebacken 26, sondern überdies jeweils auch eine Fußaufnahme 42 für einen Einzelfuß 52 auf. Dieser ist in seinem tischnahen Teil mit einem geriffelten Kunststoffgriff 54 versehen, der (vgl. Fig. 7) als Hülse außen über den metallischen Einzelfuß geschoben ist. Über das obere Ende des Einzelfußes 52 steht axial ein Verriegelungszapfen 56 nach oben vor. Der Verriegelungszapfen 56 ist selbst an seinem oberen Ende mit zwei einander diametral entgegengesetzt angeordneten Radialzapfen 58 versehen, die der Verriegelung des Einzelfußes 52 in der in der Tischzarge 46 versenkten Fußaufnahme dienen.

Fig. 7 zeigt, daß die Fußaufnahme in diesem Ausführungsbeispiel aus einer in der Tischplatte 46 gehalterten und in diese versenkten Vertikalhülse 60 besteht, die (vgl. Fig. 5) zwei einander diametral gegenüberliegenden Radialschlitze 62 aufweist. Es kann nun der Einzelfuß 52 mit seinen einander diametral entgegengesetzt gerichteten Radialzapfen 58 in die Radialschlitze 62 und mit seinem Verriegelungszapfen 56 in die Vertikalhülse 60 eingeführt und bis zum Anschlag 64 (Fig. 7) nach oben geführt werden. Zur Verriegelung der Teile gegeneinander in der in Fig. 7 gezeigten Stellung durch eine bloße Rechtsdrehung des Einzelfußes 52 mit Hilfe des Kunststoffgriffes 54 um einen Winkel von nur 90 ° ist das obere oder Innenende der versenkten Vertikalhülse 60 von den Radialschlitzen 62 rechtsdrehend ausgehend mit Schrägrampen versehen, so daß bei dieser Rechtsdrehung die Radialzapfen 58 auf diesen Schrägrampen 66 auflaufen, wodurch der Einzelfuß 52 noch weiter in die Fußaufnahme 42 hineingezogen und durch die Abstützung der Teile aneinander festgelegt wird. In der Endstellung kann auch eine Rastung vorgesehen sein. Durch Linksdrehung läßt sich die Verbindung wieder lösen.

### Bezugszeichenliste

- 10: Verketter
- 12: Ankeröffnung
- 14: Handrad
- 16: Spiralnut
- 18: Radialnut
- 20: Dorndurchtrittsöffnung
- 22: Einhängezapfen
- 24: Einhängezapfen
- 26: Aufnahmebacken
- 28: Grundplatte
- 30: Verriegelungsdorn
- 32: Lagermulde
- 34: Pfeil
- 36: Pfeil
- 38: Pfeil
- 40: Pfeil
- 42: Fußaufnahme
- 44: Stapelpuffer
- 46: Tischplatte
- 48: Zugangsöffnung
- 50: Klappe
- 52: Einzelfuß
- 54: Kunststoffgriff
- 56: Verriegelungszapfen
- 58: Radialzapfen
- 60: Vertikalhülse
- 62: Radialschlitz
- 64: Anschlag
- 66: Schrägrampe

## Patentansprüche

1. Zerlegbares Tischsystem aus untereinander durch Kupplungselemente lösbar verbundenen Tischplatten mit auf der Unterseite der Tischplatten in Fußaufnahmen (42) lösbar befestigten Einzelfüßen (52), dadurch gekennzeichnet, daß jedes Kupplungselement aus drei Teilen besteht, nämlich zwei bezüglich der Aufnahmemulden untereinander baugleichen Aufnahmebakken (26), von denen je eine auf der Unterseite einer der beiden zu verbindenden Tischplatten befestigt ist, sowie einem losen, also nicht Teil einer der zu verbindenden Tischplatten darstellenden, in beide Aufnahmebacken (26) einzusetzenden, den Spalt zwischen benachbarten Tischplatten überbrückenden Verketter (10), der sich auf einem in die Aufnahmemulde vorragenden Verriegelungsdorn (30) mit einer diesem zugeordneten Ankeröffnung (12) an seinem einen Ende zugfest abstützt, während er den Verriegelungsdorn (30) des anderen Aufnahmebakkens (26) in einem Handrad (14) mit Spiralnut (16) aufnimmt, das am anderen Ende des Verketters (10) drehbar gelagert ist.

2. Vorrichtung nach Anspruch 1, dadurch gekennzeichnet, daß die Aufnahmemulde der Aufnahmebacken (26) für den Verketter (10) vom Tischspalt weg konisch verengt ist, der Verriegelungsdorn (30) von der Mitte des Muldenbodens in die Mulde vorsteht und auch das die Ankeröffnung (12) aufweisende Ende des Verketters (10) entsprechend konisch verjüngt ist.

3. Vorrichtung nach Anspruch 1 oder 2, dadurch gekennzeichnet, daß die Stirnwand des Verketters (10) neben dem Handrad (14) von einer Dorndurchtrittsöffnung (20) durchbrochen und die Spiralnut (16) an ihrem den größten Achsabstand aufweisenden Ende zu einer Radialnut (18) abgekröpft ist, die mit der Dorndurchtrittsöffnung (20) in einer Drehendstellung des Handrades (14) fluchtet.

4. Vorrichtung nach Anspruch 3, dadurch gekennzeichnet, daß diese Drehendstellung des Handrades (14) gerastet ist.

5. Vorrichtung nach einem der Ansprüche 1 bis 4, dadurch gekennzeichnet, daß am tischspaltseitigen Maul der Aufnahmemulden in den seitlichen Backen Lagermulden (32) ausgebildet sind, denen zwei in der Oberseite des Verketters (10) ausgebildete, über die Oberseite halbzylindrisch und seitlich beidseits vollzylindrisch vorstehende, untereinander parallele Einhängezapfen (22,24) entsprechen.

6. Vorrichtung nach Anspruch 5, dadurch gekennzeichnet, daß die Abstände, den die beiden Einhängezapfen (22,24) von den Längsenden des Verketters (10) haben, gleich und zumindest nahezu gleich dem Abstand der beiden Einhängezapfen (22,24) voneinander sind.

7. Vorrichtung nach einem der Ansprüche 1 bis 6, dadurch gekennzeichnet, daß die Aufnahmebacken (26) jeweils Teil eines Eckbeschlages auf der Unterseite jeder Tischplatte sind, der zugleich eine Fußaufnahme (42) aufweist.

8. Vorrichtung nach Anspruch 7, dadurch gekennzeichnet, daß jede Fußaufnahme aus einer in die Tischplatte (46) versenkten Vertikalhülse (60) besteht, die von zwei einander diametral gegenüberliegenden Radailschlitzen (62) durchbrochen ist, denen zwei diametral angeordnete Radialzapfen (58) an einem der versenkten Vertikalhülse (60) entsprechenden Verriegelungszapfen (56) am oberen Ende jedes Einzelfußes (52) entsprechen.

9. Vorrichtung nach Anspruch 8, dadurch gekennzeichnet, daß das Innenende der versenkten Vertikalhülse (60) von den Radialschlitzen (62) rechtsdrehend ausgehende Schrägrampen (66) aufweist.

10. Vorrichtung nach einem der Ansprüche 1 bis 9, dadurch gekennzeichnet, daß in der Tischplatte (46) im Bereich der Aufnahmemulden der Aufnahmebacken (26) Klappen (50) angelenkt sind, die bei nicht eingesetztem Verketter (10) die Zugangsöffnungen (48) der Aufnahmemulde in der Tischplatte (46) verschließen.

## Claims

1. A dismantlable table system comprising table plates which are releasably connected to one another by means of coupling elements, with single legs (52) releasably secured to the underside of the table plates in leg receiving elements (42), characterised in that each coupling element comprises three parts, namely two receiving jaws (26), which have the same structure as regards the receiving hollows and one of which is secured in each case to the underside of one of the two table plates which are to be connected, and a free linking element (10) not part of one of the table plates which are to be connected, which is to be inserted into both receiving jaws (26) and which bridges the gap between adjacent table plates, the linking element (10) being supported in a tension-proof manner at one of its ends on a locking peg (30) projecting into the receiving hollow by means of an associated anchoring aperture (12), whilst it receives the locking peg (30) of the other receiving jaw (26) in a handwheel (14) with a spiral groove (16), which wheel is rotatably mounted at the other end of the linking element (10).

2. A device according to claim 1, characterised in that the receiving hollow of the receiving jaws (26) for the linking element (10) tapers conically in the direction away from the table gap, the locking peg (30) projects from the centre of the hollow base into the hollow, and the end of the linking element (10) comprising the anchoring aperture (12) also tapers conically in corresponding fashion.

3. A device according to claim 1 or 2, characterised in that the end wall of the linking element (10) adjacent the handwheel (14) is interrupted by a peg aperture (20) and the spiral groove (16) is cranked at its end having the greatest axial distance to form a radial groove (18), which is aligned with the peg aperture (20) when the handwheel (14) is in a rotational end position.

4. A device according to claim 3, characterised in that this rotational end position of the handwheel (14) is locked.

5. A device according to one of claims 1 to 4, characterised in that bearing hollows (32) are formed in the lateral jaws at the mouth of the receiving hollows on the side facing the table gap, two parallel suspension journals (22, 24), which are formed on the upper side of the linking element (10) and project beyond the upper side as semi-cylinders and either side of the linking element as full cylinders, corresponding to the bearing hollows (32).

6. A device according to claim 5, characterised in that the distances between the two suspension journals (22, 24) and the longitudinal ends of the linking element (10) are equal and are at least approximately equal to the distance between the two suspension journals (22, 24).

7. A device according to one of claims 1 to 6, characterised in that the receiving jaws (26) each form part of a corner fixture on the underside of each table plate, which corner fixture also comprises a leg receiving element (42).

8. A device according to claim 7, characterised in that each leg receiving element comprises a vertical sleeve (60), which is recessed in the table plate (46) and is penetrated by two diametrally opposed radial slots (62), which correspond to two diametrally opposed radial journals (58) on a locking journal (56) corresponding to the recessed vertical sleeve (60) at the upper end of each single leg (52).

9. A device according to claim 8, characterised in that the inner end of the recessed vertical sleeve (60) comprises inclined ramps (66) extending in a clockwise direction from the radial slots (62).

10. A device according to one of claims 1 to 9, characterised in that flaps (50) are articulatedly connected to the table plate (46) in the region of the receiving hollows of the receiving jaws (26), which flaps seal the access apertures (48) of the receiving hollows in the table plate (46) when a linking element (10) is not inserted.

## Revendications

1. Système de tables démontables constitué de plateaux de table reliés amoviblement les uns aux autres par des éléments d'accouplement avec des pieds individuels (52) fixés amoviblement sur le côté inférieur des plateaux de table dans des logements de pied (42), caractérisé en ce que chaque élément d'accouplement est constitué de trois parties, à savoir de deux mâchoires de réception (26) de même construction relativement aux creux de réception dont respectivement une est fixée sur le côté inférieur d'un des deux plateaux de table à relier, ainsi que d'un organe d'enchaînement (10) mobile, ne faisant donc pas partie d'un des plateaux de table à relier, à placer dans les deux mâchoires de réception (26), recouvrant la fente entre des plateaux de table avoisinants, qui prend appui, en résistant à la traction, sur un boulon de verrouillage (30) faisant saillie dans le creux de réception avec une ouverture d'ancrage (12) associée à celui-ci à l'une de ses extrémités, tandis qu'il reçoit le boulon de verrouillage (30) de l'autre mâchoire de réception (26) dans une roue à main (14) présentant une rainure hélicoïdale (16) qui est logée de façon rotative à l'autre extrémité de l'organe d'enchaînement (10).

2. Dispositif selon la revendication 1, caractérisé en ce que le creux de réception des mâchoires de réception (26) de l'organe d'enchaînement (10) diminue en cône au loin de la fente de table, que le boulon de verrouillage (30) fait saillie du milieu du fond de creux dans le creux et que, de même, l'extrémité présentant l'ouverture d'ancrage (12) de l'organe d'enchaînement (10) diminue de façon correspondante en cône.

3. Dispositif selon la revendication 1 ou 2, caractérisé en ce que la paroi frontale de l'organe d'enchaînement (10) est percée à côté de la roue à main (14) par une ouverture de passage de boulon (20) et que la rainure hélicoïdale (16) est coudée à son extrémité présentant le plus grand écart d'axe en une rainure radiale (18) qui est alignée avec l'ouverture de passage de boulon (20) dans une position finale de rotation de la roue à main (14).

4. Dispositif selon la revendication 3, caractérisé en ce que cette position finale de rotation de la roue à main (14) est crantée.

5. Dispositif selon l'une des revendications 1 à 4, caractérisé en ce que sont réalisés à la gueule, côté fente de table, des creux de réception, dans les mâchoires latérales des creux de support (32) auxquels correspondent deux tenons de suspension (22, 24) réalisés dans le côté supérieur de l'organe d'enchaînement (10), en saillie sur le côté supérieur de façon demi-cylindrique et latéralement des deux côtés entièrement cylindrique, parallèles l'un à l'autre.

6. Dispositif selon la revendication 5, caractérisé en ce que les écarts des deux tenons de suspension (22, 24) des extrémités longitudinales de l'organe d'enchaînement (10) sont identiques et sont au moins presque égaux à l'écart entre les deux tenons de suspension (22, 24).

7. Dispositif selon l'une des revendications 1 à 6, caractérisé en ce que les mâchoires de réception (26) constituent respectivement une partie d'une pièce de coin sur le côté inférieur de chaque plateau de table et qui présente en même temps un logement de pied (42).

8. Dispositif selon la revendication 7, caractérisé en ce que chaque logement de pied est constitué d'une douille verticale (60) noyée dans le plateau de table (46) qui est percée par deux fentes radiales (62) diamétralement opposées l'une à l'autre, auxquelles correspondent deux tenons radiaux (58) disposés diamétralement à un tenon de verrouillage (56) correspondant à la douille verticale noyée (60), à l'extrémité supérieure de chaque pied individuel (52).

9. Dispositif selon la revendication 8, caractérisé en ce que l'extrémité intérieure de la douille verticale noyée (60) présente des rampes inclinées (66) partant des fentes radiales (62) suivant une rotation à droite.

10. Dispositif selon l'une des revendications 1 à 9, caractérisé en ce que sont articulées dans le plateau de table (46) au voisinage des creux de réception des mâchoires de réception (26) des volets (50) qui, lorsque l'organe d'enchaînement (10) n'est pas mis en place, ferment les ouvertures d'accès (48) du creux de réception dans le plateau de table (46).
